# EUROPEAN PATENT APPLICATION

(11) **EP 4 043 668 A1**
(43) Date of publication of application: **17.08.2022**
(21) Application number: 21856141.3
(22) Date of filing: 06.08.2021
(51) Int. Cl.: E04H 1/12, A47B 17/04, A47B 13/08, A47F 9/04, F24F 3/16, F24F 7/007, G06Q 30/06

(54) **DROPLET BLOCKING TABLE AND STRUCTURE INCLUDING SAME**

(30) Priority: 14.08.2020 KR 20200102148
(71) Applicant: Yoon, Soo Jung, Sejong 30064 (KR)
(72) Inventor: Yoon, Soo Jung, Sejong 30064 (KR)
(74) Representative: RGTH
(86) International application number: PCT/KR2021/010387
(87) International publication number: WO 2022/035135

(57) **Abstract**

A structure for providing an indoor space includes an air-sterilizing apparatus configured to suction in air existing in the indoor space and to sterilize the suctioned air, a droplet blocking table configured to discharge the sterilized air in a direction toward a table top so as to allow the discharged air to be suctioned in along a central axis of the droplet blocking table, an air-conditioning apparatus configured to move the air suctioned in by the droplet blocking table, and an ordering apparatus configured to perform an order for a menu according to information input from a user.

## Description

### [Technical Field]

The present invention relates to a droplet blocking table and a structure including the same, and more particularly, to a droplet blocking table provided to prevent virus infection through droplets and a structure including the same.

### [Background Art]

A highly infectious disease such as Coronavirus disease-19 (COVID-19) easily spreads among people through droplets. Accordingly, as a representative method of preventing infection through droplets, there is a method of wearing a mask.

Meanwhile, in the case of stores such as restaurants, cafes, and the like where food or drinks are sold, a customer has no choice but to take off his or her mask while consuming the food or drink. Also, when there are customers sitting down at a table and facing each other, the risk of virus infection through droplets increases. Also, even among customers sitting down at different tables, there is potential for infection depending on the distance or orientation between the tables, or an influence of wind from a fan, or the like.

Accordingly, a method of preventing infection through droplets in a store such as a restaurant, cafe, or the like is required.

### [Disclosure]

### [Technical Problem]

The present invention is directed to providing a droplet blocking table configured to block droplets spreading from an opposite side of a table top by discharging air toward the table top and a structure including the same.

### [Technical Solution]

One aspect of the present invention provides a structure providing an indoor spacein a store . The structure includes an entrance, an air-sterilizing apparatus configured to suction in air present in the indoor space and to sterilize the suctioned air, a droplet blocking table disposed within the indoor space and comprising a table top, wherein the sterilized air is discharged from a position spaced apart at a distance from an upper side of the table top in a direction toward the table top, and the discharged air is suctioned in along a central axis of the droplet blocking table, an air-conditioning apparatus configured to move the air suctioned by the droplet blocking table, wherein a part of the suctioned air is discharged by the droplet blocking table, and an ordering apparatus disposed on one side of the droplet blocking table and configured to transfer order information and payment information input from a user to an order and payment server provided in advance.

The droplet blocking table may be provided to have one side thereof fixed to an opposite wall disposed on an opposite side of the entrance in the indoor space and an other side of the droplet blocking table disposed toward the entrance, and wherein a support is provided on the other side of the droplet blocking table to support the droplet blocking table.

The support may include a discharge tube therein which connects the droplet blocking table and the air-conditioning apparatus and the air suctioned in by the droplet blocking table is transferred to the air-conditioning apparatus via the discharge tube.

Another aspect of the present invention provides a droplet blocking table including a table top having a central axis provided in a direction horizontal to a ground, an air discharge portion spaced apart at a distance from an upper side of the table top, disposed along the central axis, and configured to discharge air in a direction toward the table top, a control portion configured to control an intensity of the air discharged from the air discharge portion, an air suction portion disposed on the table top along the central axis to correspond to the air discharge portion and configured to suction the discharged air, and a filter portion disposed on one side of the air suction portion to filtrate the air suctioned in by the air suction portion and to be separable from the table top.

The air discharge portion may include a plurality of air discharge holes through which the air is discharged, and the plurality of air discharge holes are spaced apart at preset distances along a plurality of rows arranged to be parallel to the central axis and to be symmetrical on a basis of the central axis.

In the air discharge portion, with respect to a straight line perpendicularly passing through the central axis and a central point between two adjacent air discharge holes disposed in a first row, an air discharge hole in a second row adjacent to the first row may be provided at a point where the straight line intersects with the second row.

The droplet blocking table may further include a sensor portion configured to transmit a measurement signal to a chair disposed on a side of the table top, to receive a reflection signal generated by the measurement signal being reflected by an object, and to generate distance information indicating a distance between the table top and the object.

When the distance information indicates the distance between the table and the object as a distance corresponding to an empty seat, the control portion may control the air discharge portion to stop discharging the air.

When the distance information indicates the distance between the table and the object as a distance corresponding to an occupied seat, the control portion may control the intensity of the air discharged from the air discharge portion according to the distance between the table and the object.

The droplet blocking table may further include a sensor portion configured to measure a wind velocity of the air suctioned in by the air suction portion and generate wind velocity information.

When the wind velocity information deviates from a preset wind velocity range corresponding to the intensity of the air discharged from the air discharge portion, the control portion may control an inspection signal requesting an inspection for the air suction portion to be output.

The droplet blocking table may further include a sensor portion including a sensing region disposed on one side of the air suction portion, wherein the sensor portion is configured to sense an object present in the sensing region and to generate sensing information.

### [Advantageous Effects]

According to one aspect of the present invention, a droplet blocking table and a structure including the same are provided so as to block droplets spreading from an opposite side of a table top by discharging air toward the table top.

### [Description of Drawings]

FIG. 1 is a schematic diagram of a virus-free house including a structure according to one embodiment of the present invention.
FIG. 2 is a front view of the structure according to one embodiment of the present invention.
FIG. 3 is a side view of the structure according to one embodiment of the present invention.
FIG. 4 is a front view of a droplet blocking table according to one embodiment of the present invention.
FIG. 5 is a side view of the droplet blocking table according to one embodiment of the present invention.
FIG. 6 is a block diagram illustrating a process in which a control portion of the droplet blocking table controls the intensity of air discharged from an air discharge portion according to one embodiment of the present invention.
FIG. 7 is a schematic diagram illustrating one embodiment of the air discharge portion of the droplet blocking table according to one embodiment of the present invention.
FIG. 8 is a schematic diagram illustrating one embodiment of an air suction portion of the droplet blocking table according to one embodiment of the present invention.

### [Modes of the Invention]

The following detailed description of the present invention refers to the attached drawings which illustrate a particular embodiment as an example in which the present invention is implementable. This embodiment will be described in detail to allow those skilled in the art to adequately implement the present invention. It should be understood that a variety of embodiments of the present invention differ from one another but are not mutually exclusive. For example, a particular shape, structure, and feature disclosed herein will be implemented as another embodiment without departing from the concept and scope of the present invention. Also, it should be understood that positions and arrangement of individual elements in each disclosed embodiment may vary without departing from the concept and scope of the present invention. Accordingly, it should be noted that the following detailed description is not provided to have a limitative meaning, and the scope of the present invention, when appropriately described, will be defined only by the attached claims in addition to all equivalents of the claims. In the drawings, like reference numerals refer to like or similar functions throughout a variety of aspects.

Hereinafter, exemplary embodiments of the present invention will be described in more detail with reference to the attached drawings.

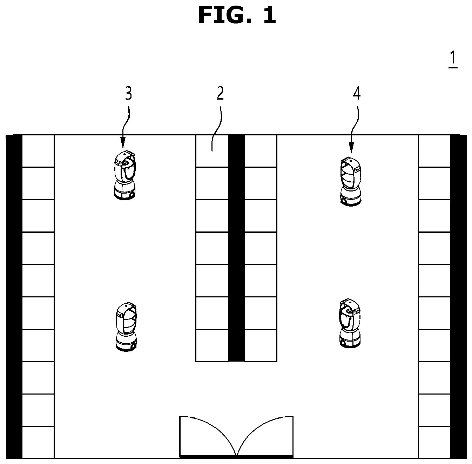

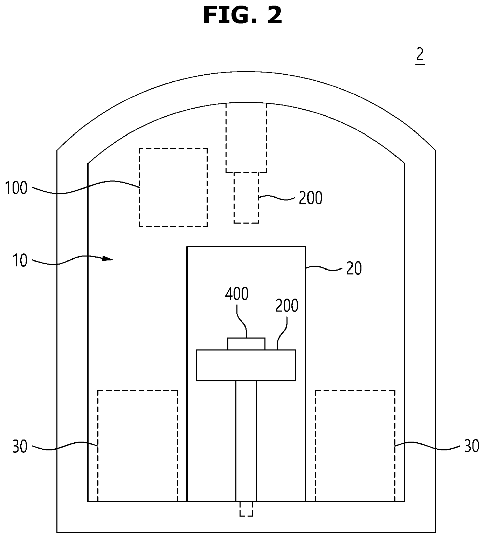

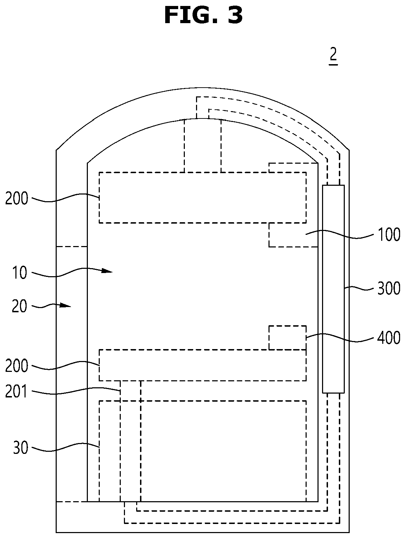

FIG. 1 is a schematic diagram of a virus-free house including a structure according to one embodiment of the present invention, FIG. 2 is a front view of the structure according to one embodiment of the present invention, and FIG. 3 is a side view of the structure according to one embodiment of the present invention.

A structure 2 may be provided to form an independent indoor space 10 in a store such as restaurants, cafes, and the like.

Accordingly, the structure 2 may include one entrance 20 connecting the store to the indoor space 10 so that customers may move from the store to the indoor space 10 or move from the indoor space 10 to the store through the entrance 20 of the structure 2.

In relation thereto, the store provided with the structure 2 may be referred to as a virus-free house 1. In this case, the virus-free house 1 may include one or more structures 2 so that the virus-free house 1 may include one or more independent indoor spaces 10 due to the structures 2.

Meanwhile, the structure 2 may be provided with a plurality of chairs 30 arranged on both sides of the entrance 20. Here, the structure 2 may be provided with a droplet blocking table 200 in the middle of the plurality of chairs 30 arranged on both sides of the entrance 20.

Meanwhile, the virus-free house 1 may be provided with a plurality of such structures 2 so that a customer who visits the virus-free house 1 may use the structure 2 not occupied by another customer among the plurality of structures 2 present in the virus-free house 1.

In this case, the structure 2 may isolate customers who visit the virus-free house 1 according to a group to which each customer belongs so that the virus-free house 1 may prevent a customer having an arbitrary infectious virus from infecting other customers with the corresponding virus through droplets.

In relation thereto, the structure 2 may include an air-sterilizing apparatus 100, a droplet blocking table 200, an air-conditioning apparatus 300, and an ordering apparatus 400.

The air-sterilizing apparatus 100 may suction air present in the indoor space 10 and sterilize a virus present in the suctioned air.

To this end, the air-sterilizing apparatus 100 may include a purification filter so as to collect or filtrate out contaminants such as dust, fine dust, ultrafine dust, and the like which are present in the suctioned air.

Here, the purification filter may include a plurality of single filters having different shapes, and these single filters may be configured to collect or filter out different contaminants.

For example, the single filters may include a pre-filter configured to collect coarse-grained dust included in the air, an activated carbon filter configured to collect particles such as an odor, a harmful gas, total volatile organic compounds (TVOC), or the like included in the air, and H13 high efficiency particulate air (HEPA) filter configured to collect particles such as ultrafine dust of 2.5 micrometers or less included in the air. In this case, the purification filter may be provided to have a triple filter form including a pre-filter, an activated carbon filter, and an H13 HEPA filter.

The above single filters may be provided as a mesh form so that air may pass therethrough and contaminants may be filtered out. Here, the single filters may be formed of a metal material or a synthetic resin material.

Also, the purification filter may employ the plurality of different single filters provided to different uses according to characteristics of the indoor space 10 in which the air-sterilizing apparatus 100 is operated or may utilize a plurality of already well-known different filters.

Meanwhile, the air-sterilizing apparatus 100 may further include a sterilizing lamp configured to sterilize the air purified by the purification filter.

Here, the sterilization lamp may be provided to emit ultraviolet rays shown within a wavelength range of 100 nanometers to 280 nanometers. For example, as the sterilization lamp, a UV-C ultraviolet sterilizing lamp or the like may be used.

Also, the air-sterilizing apparatus 100 may further include an ionizer provided to charge germs and the like present in the air by applying a high voltage to an electrode.

Accordingly, the air-sterilizing apparatus 100 may further include a plate electrode to which a high voltage is applied so as to adsorb germs and the like charged by the ionizer.

The air-sterilizing apparatus 100 may utilize already well-known techniques to suction and sterilize air and discharge the sterilized air as described above.

Meanwhile, the air-sterilizing apparatus 100 may be installed at an arbitrary position in the indoor space 10. For example, the air-sterilizing apparatus 100 may be provided to be wall-mountable and be installed on an opposite wall present on an opposite side of the entrance 20 in the indoor space 10.

The droplet blocking table 200 may be provided so that the table top 210 may be provided in the middle of the plurality of chairs 30 arranged on both sides of the entrance 20, air may be discharged in a direction toward the table top 210 from a position spaced at a certain distance from above the table top 210, and the droplet blocking table 200 may be provided to suction the discharged air along a central axis of the table top 210.

Here, the droplet blocking table 200 may be provided to have one side fixed to the opposite wall provided on the opposite side of the entrance 20 in the indoor space 10 and may include one support 201 configured to support the droplet blocking table 200 on the other side disposed in a direction toward the entrance 20.

Here, the support 201 may be provided to transfer air suctioned in by the droplet blocking table 200 to the air-conditioning apparatus 300. To this end, the support 201 may include a discharge tube configured to connect the droplet blocking table 200 to the air-conditioning apparatus 300 and provided inside the support 201.

A shape, structure, feature, and operation of the droplet blocking table 200 will be described below in detail.

The air-conditioning apparatus 300 may move the suctioned air to allow a part of the air suctioned in by the droplet blocking table 200 to be discharged by the droplet blocking table 200.

Meanwhile, the air-conditioning apparatus 300 may be provided to adjust a temperature or humidity of the indoor space 10. In this case, the air-conditioning apparatus 300 may include a sensor configured to measure the temperature or humidity of the indoor space 10.

Accordingly, according to a preset temperature or humidity, the air-conditioning apparatus 300 may be provided to allow a temperature of humidity measured by the sensor configured to measure a temperature or humidity to follow the preset temperature or humidity.

Here, the air-conditioning apparatus 300 may further include an additional adjustor to allow a user to set a target temperature or target level of humidity. In this case, the air-conditioning apparatus 300 may be provided to allow the temperature or humidity measured by the sensor configured to measure a temperature or humidity to follow the target temperature or target level of humidity.

In relation thereto, the air-conditioning apparatus 300 may be provided to operate in a cooling mode or a heating mode. Accordingly, when the air-conditioning apparatus 300 operates in the cooling mode, air may be suctioned in from the outside and be cooled using a low-temperature coolant. The air-conditioning apparatus 300 may be provided to discharge the cooled air into the indoor space 10.

Also, when the air-conditioning apparatus 300 operates in the heating mode, air may be suctioned therein from the outside and heated using radiant heat emitted from a heating element provided in advance. The air-conditioning apparatus 300 may be provided to discharge the heated air into the indoor space 10.

The air-conditioning apparatus 300 may utilize already well-known techniques to suction in air and heat or cool the suctioned air or adjust humidity of the suctioned air as described above.

Meanwhile, the air-conditioning apparatus 300 may be embedded and installed inside the opposite wall provided on the opposite side of the entrance 20.

The ordering apparatus 400 may be provided on one side of the droplet blocking table 200 to transfer order information and payment information input from the user to an order and payment server provided in advance.

To this end, the ordering apparatus 400 may be provided as a small terminal shape such as a tablet, smart phone, and the like and may be connected to the order and payment server through a wireless or wired network. Here, the ordering apparatus 400 may be provided in the form of a quick response (QR) code to be connected to the order and payment server using a personal device such as a smart phone and the like of the user. In this case, the personal device of the user may recognize a QR code according to an image-capturing operation of the user and may be connected to the order and payment server through a wireless network according to the recognized QR code.

Here, in the ordering apparatus 400, unique identifying information may be set to distinguish each of the structures 2 when the plurality of structures 2 are provided in the virus-free house 1.

Accordingly, the ordering apparatus 400 may receive one random menu item from the user among one or more menu items provided by the order and payment server provided in advance.

Here, the order and payment server may store menu information showing menu items provided to be sold in the virus-free house 1. Here, the menu information may include information such as titles, prices, and options, and the like of the menu items.

Accordingly, the ordering apparatus 400 may generate order information on the basis of the menu information related to the menu item input from the user to show information on a menu item ordered by the user, a payment amount, and the like and may be provided to allow the user to make payment according to the generated order information.

Here, the order and payment server may transfer payment information input through the ordering apparatus 400 to a server apparatus provided in a card company, bank, or the like to make payment.

Here, the payment information may include information on a card number, a card validation code (CVC) number, a card expiration date, and the like and may further include information indicating a sum of prices according to menu items input from the user.

The ordering apparatus 400 may utilize already well-known techniques to make payment for a menu item input from the user as described above.

Accordingly, a customer using the structure 2 may order a menu item provided in the virus-free house 1 using the ordering apparatus 400.

Here, the virus-free house 1 may make a menu item using an unmanned cooking apparatus configured to make a menu item ordered by a customer. The virus-free house 1 may provide a made menu item to a customer using an unmanned serving apparatus 4 configured to transfer, in an unmanned manner, a made menu item to the structure 2 in which the ordering apparatus 400, in which a payment is made for the corresponding menu item, is installed.

In this case, the virus-free house 1 may be set as an unmanned store which does not require additional human power for providing services.

Also, in the virus-free house 1, an unmanned sterilizing apparatus 3 configured to be movable may be disposed. Here, the unmanned sterilizing apparatus 3 may be provided to purify ambient air and to spray a sterilizing solution to a periphery of a region in which the unmanned sterilizing apparatus 3 moves. Accordingly, the unmanned sterilizing apparatus 3 may move inside the virus-free house 1 and maintain a sterilized state inside the virus-free house 1.

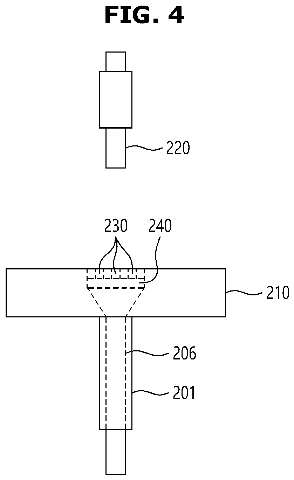

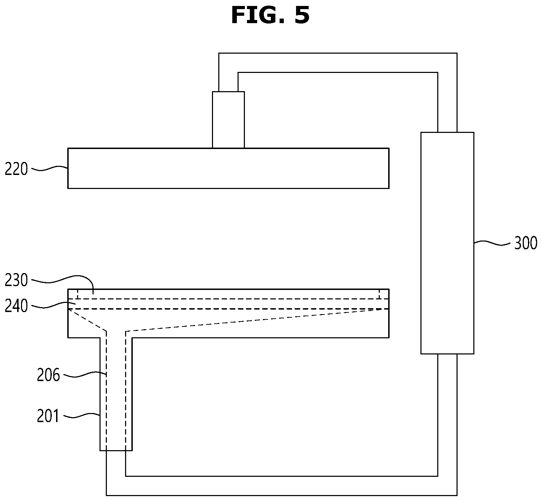

FIG. 4 is a front view of the droplet blocking table according to one embodiment of the present invention, and FIG. 5 is a side view of the droplet blocking table according to one embodiment of the present invention.

The droplet blocking table 200 may include the table top 210, an air discharge portion 220, an air suction portion 230, and a filter portion 240.

The table top 210 may be provided to allow the chairs 30 to be disposed on both sides with respect to the central axis provided in a direction horizontal to the ground.

Here, the central axis may be set to indicate a straight line passing through a center of the table top 210. For example, the central axis may be set to be a straight line parallel to a longitudinal direction of the table and passing the center of the table. In other words, the central axis may be set to be a straight line passing a central point of one edge of the table top 210 and the center of the table top 210. Here, one edge of the table top 210 may be an edge disposed in a direction toward the entrance 20.

Also, the central axis may be set to be a straight line passing the center from one apex of the table top 210.

Also, the table top 210 may be provided to have one side fixed to the opposite wall provided on the opposite side of the entrance 20 in the indoor space 10 and may include one support 201 configured to support the table top 210 on the other side disposed in a direction toward the entrance 20.

Here, the support 201 may be provided to transfer air suctioned in by the droplet blocking table 200 to the air-conditioning apparatus 300. To this end, the support 201 may include a discharge tube 206 configured to connect to the droplet blocking table 200 to the air-conditioning apparatus 300 and provided inside the support 201.

The air discharge portion 220 may be disposed along the central axis set on the table top 210 while being spaced at an arbitrary distance apart from an upper side of the table top 210 and may discharge air in a direction toward the table top 210.

Accordingly, the air discharge portion 220 may be provided to generate an air curtain effect or an air barrier above the table top 210.

Here, the air discharge portion 220 is connected to the air-conditioning apparatus 300 so that the intensity of air discharged from the air discharge portion 220 may be adjusted by the air-conditioning apparatus 300. In relation thereto, the air-conditioning apparatus 300 may be embedded and installed inside the opposite wall provided on the opposite side of the entrance 20. In this case, the air-conditioning apparatus 300 may include a pipe connected to the air discharge portion 220 through the opposite wall and a ceiling of the structure 2 to transfer air.

Also, the air discharge portion 220 may include an additional fan or the like so as to adjust the intensity of discharged air by controlling a rotation speed of the fan.

Meanwhile, the air discharge portion 220 may include a plurality of air discharge holes parallel to the central axis set on the table top 210 and spaced at preset distances apart through which air is discharged along a plurality of rows arranged to be symmetrical on the basis of the central axis.

Here, the air discharge holes may be provided along odd-numbered rows or even-numbered rows arranged to be symmetrical on the basis of the central axis. Here, when the air discharge holes are provided along the odd-numbered rows, one row in which the air discharge holes are provided may be provided to coincide with the central axis set on the table top 210.

Also, in the air discharge portion 220, with respect to a straight line perpendicularly passing through the central axis and a central point between two adjacent air discharge holes among a plurality of air discharge holes provided in an arbitrary first row, air discharge holes in a second row adjacent to the first row may be provided at a point where the straight line intersects with the second row.

Here, the plurality of air discharge holes provided in the second row may be arranged at the same distance as a distance between the two adjacent air discharge holes among the plurality of air discharge holes provided in the first row.

In this case, it should be understood that the air discharge holes may be provided in a zigzag shape with the air discharge holes arranged in an adjacent row thereof. Also, the air discharge holes may be provided at the same positions as the air discharge holes present in an adjacent row.

Meanwhile, when the chairs 30 are provided on each edge of the table top 210, the air discharge portion 220 may include air discharge holes provided along a straight line connecting an edge facing an apex adjacent to the corresponding edge to an apex adjacent to the apex or the facing edge.

For example, when the chairs 30 are provided on each edge of the table top 210 having a quadrangular shape, the air discharge portion 220 may include air discharge holes 221 provided along an X-shaped straight line provided to connect each apex to the center of the table top 210.

The air suction portion 230 may be disposed on the table top 210 along the central axis set on the table top 210 to correspond to the air discharge portion 220 and may suction air discharged from the air discharge portion 220.

Here, when the air discharge portion 220 is parallel to the central axis set on the table top 210 and the plurality of air discharge holes are provided along a plurality of rows arranged to be symmetrical on the basis of the central axis, the air suction portion 230 may be provided on the table top 210 in a plurality of rows along the plurality of rows in which the respective air discharge holes are provided.

The filter portion 240 may be provided on an inlet end of the air suction portion 230 to filtrate air suctioned in the air suction portion 230 and may be configured to be separable from the table top 210. Here, the inlet end of the air suction portion 230 may mean a point at which the air discharged from the air discharge portion 220 starts to be suctioned in by the air suction portion 230 which may also be understood as a point at which the discharged air comes into contact with the table top 210.

To this end, the filter portion 240 may be provided to have a mesh shape to prevent objects such as belongings or the like of a customer from being suctioned in the air suction portion 230 and may include a single filter such as a pre-filter and the like for collecting coarse particles included in the air.

Also, the filter portion 240 may include different single filters provided to collect or filter out different contaminants and may include a plurality of single filters.

Meanwhile, the filter portion 240 may be provided to be mounted by being pushed from an edge of one side of the table top 210. In this case, the filter portion 240 may be provided to have a rail shape and to be installed on one side of the air suction portion 230 by being pushed from the end of one side of the table top 210.

Also, the filter portion 240 may be provided to be fitted on one side of the air suction portion 230 from above the table top 210.

As described above, the filter portion 240 may be provided to be separable, replaceable, or washable according to a certain period.

Meanwhile, the droplet blocking table 200 may further include a sensor portion and a control portion.

Accordingly, the droplet blocking table 200 may be provided to allow the control portion to control the intensity of air discharged from the air discharge portion 220 according to information measured or generated by the sensor portion.

In relation thereto, the sensor portion may transmit a measurement signal to the chairs 30 arranged on both sides of the table top 210 and may receive a reflection signal generated by the measurement signal being reflected from an arbitrary object so as to generate distance information indicating a distance between the table top 210 and the object. To this end, as the sensor portion, an ultrasonic sensor or the like may be used. Here, the object may mean a person or the like located on the chair 30.

Here, in the sensor portion, a plurality of sensors may be arranged at certain distances on the edge of the table top 210 which are present on a side on which the chair 30 is located so as to recognize an object present on the chair 30 regardless of a position of the object. In this case, the sensor portion may be provided so that a control portion 270 performs an operation according to distance information indicating a smallest distance between the table top 210 and the object among pieces of distance information measured by the plurality of sensors.

Accordingly, when the distance information indicates a distance set with respect to the chair 30 as an empty seat, the control portion may control the air discharge portion 220 to stop discharging the air.

To this end, the control portion may control the air discharge holes 221 provided in the air discharge portion 220 to become a closed state and may control the air-conditioning apparatus 300 or the air discharge portion 220 not to allow the air discharge portion 220 to discharge air.

Also, when the distance information indicates a distance set by a person being present in the chair 30, the control portion may control the intensity of air discharged from the air discharge portion 220 according to a distance between the table top 210 and the person which is shown in the distance information.

For example, when the distance information is determined as a distance between the table top 210 and a person present in the chair 30 which is longer than a preset reference distance, the control portion may control the air discharge portion 220 to discharge air of a first intensity. When the distance information is determined as a distance between the table top 210 and the person present in the chair 30 which is shorter than the preset reference distance, the control portion may control the air discharge portion 220 to discharge air of a second intensity set to be higher than the first intensity.

Also, the sensor portion may measure a wind velocity of air suctioned in the air suction portion 230 and generate wind velocity information. To this end, the sensor portion may generate the wind velocity information using a Dines pressure tube anemograph and a pitot tube configured to measure a pressure generated along an air flow. The sensor portion may generate the wind velocity information using a sensitive anemometer and a Robinson anemometer configured to measure the number of revolutions of a fan for a certain time by rotating the fan according to an air flow. Also, the sensor portion may generate the wind velocity information using an ultrasonic anemometer using a principle in which a time in which an ultrasonic wave is transferred changes according to a wind velocity.

As described above, the sensor portion may utilize already well-known techniques to measure the intensity of an air flow.

Accordingly, when the wind velocity information deviates from a wind velocity range preset to be matched with the intensity of air which is set to be discharged from the air discharge portion 220, the control portion may control an inspection signal for requesting inspection for the air suction portion 230 to be output.

Here, the control portion may control an inspection signal having a shape which causes an auditory stimulus or a visual stimulus to be output. For example, the control portion may output an inspection signal to allow a light emitting diode (LED) light additionally provided in the droplet blocking table 200 to be turned on as a red light.

Also, the control portion may transmit the inspection signal to an additionally provided administration server through a wireless or wired network.

Here, the administration server may be a server system provided to administrate the virus-free house 1 including one or more structures 2 or one or more droplet blocking tables 200.

The sensor portion may include a sensing region on one side of the air suction portion 230 and sense an object present in the sensing region so as to generate sensing information. Here, the sensing region may be set as a region surrounding the air suction portion 230. In more detail, the sensor portion may be provided at a point adjacent to the chair 30 from the air suction portion 230 provided in the table top 210 so that the sensing region may be set as a region in which the sensor portion is provided.

Here, as the sensor portion, an ultrasonic sensor or the like configured to generate distance information according to a time interval between a time point of transmitting a signal and a time point of receiving the signal reflected by an arbitrary object by transmitting the signal and receiving the reflected signal may be used. In this case, when the distance information is within a critical distance preset to indicate whether the random object is present in the sensing region, the sensor portion may generate sensing information to indicate that the object is sensed.

Also, the sensor portion may be provided to transmit a signal on one side of the air suction portion 230 or the air discharge portion 220 and to receive the transmitted signal on one side of the air discharge portion 220 or the air suction portion 230 which corresponds to a point at which the signal is transmitted. In this case, the sensor portion may generate sensing information according to variance in the received signal.

For example, when the received signal is not sensed, the sensor portion may determine that an arbitrary object is present in the sensing region.

Here, the sensor portion may be provided so that an arbitrary air discharge hole 221 may be matched according to a position of the object sensed in the sensing information. For example, the sensor portion may include a plurality of sensors configured to generate sensing information and may be set so that the air discharge hole is matched with a position of each sensor.

Accordingly, the control portion may control the air discharge hole matched with the sensor sensing an arbitrary object that is present to be closed. Also, the control portion may control the air discharge hole matched with a region determined as an arbitrary object that is present to be closed according to the sensing information generated by the sensor portion.

To this end, the air discharge portion 220 may include a door controlled to discharge air through each air discharge hole or not to discharge air.

Here, the door may be provided to allow the air discharge hole to be opened or closed according to a direction controlled, by the control portion, to rotate. Also, the door may be provided to be controlled, by the control portion, to be changed in an inclination of the door so as to allow the air discharge hole to be opened or closed.

Accordingly, the droplet blocking table 200 may prevent a body, menu item, belongings, and the like of the customer from being destroyed or damaged by the air discharged from the air discharge portion 220.

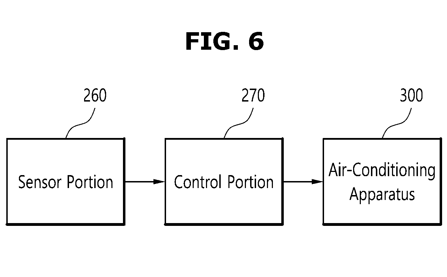

FIG. 6 is a block diagram illustrating a process in which the control portion of the droplet blocking table controls the intensity of air discharged from the air discharge portion according to one embodiment of the present invention.

Referring to FIG. 6, the sensor portion 260 may transmit a measurement signal to the chairs 30 arranged on both sides of the table top 210 and may receive a reflection signal generated by the measurement signal being reflected from an arbitrary object so as to generate distance information indicating a distance between the table top 210 and the object.

Here, in the sensor portion 260, a plurality of sensors may be arranged at certain distances on the edge of the table top 210 which are present on a side on which the chair 30 is located so as to recognize an object present on the chair 30 regardless of a position of the object. In this case, the sensor portion 260 may be provided so that the control portion 270 performs an operation according to distance information indicating a smallest distance between the table top 210 and the object among pieces of distance information measured by the plurality of sensors.

Accordingly, when the distance information indicates a distance set with respect to the chair 30 as an empty seat, the control portion 270 may control the air discharge portion 220 to stop discharging the air.

Also, when the distance information indicates a distance set by a person being present in the chair 30, the control portion 270 may control the intensity of air discharged from the air discharge portion 220 according to a distance between the table top 210 and the person which is shown in the distance information.

Meanwhile, the sensor portion 260 may measure a wind velocity of air suctioned in the air suction portion 230 and generate wind velocity information.

Accordingly, when the wind velocity information deviates from a wind velocity range preset to be matched with the intensity of air which is set to be discharged from the air discharge portion 220, the control portion 270 may control an inspection signal for requesting inspection for the air suction portion 230 to be output.

Also, the sensor portion 260 may include the sensing region on one side of the air suction portion 230 and sense an object present in the sensing region so as to generate sensing information.

Accordingly, the control portion 270 may control the air discharge hole matched with the sensor sensing an arbitrary object that is present to be closed. Also, the control portion 270 may control the air discharge hole matched with a region determined as an arbitrary object that is present to be closed according to the sensing information generated by the sensor portion 260.

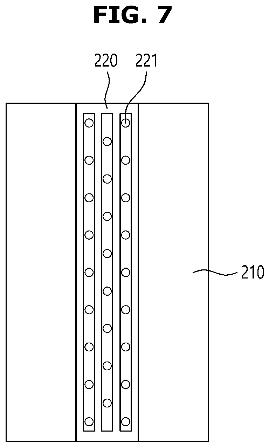

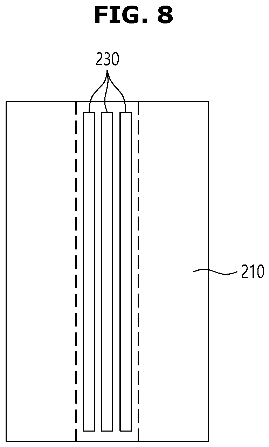

FIG. 7 is a schematic diagram illustrating one embodiment of the air discharge portion of the droplet blocking table according to one embodiment of the present invention, and FIG. 8 is a schematic diagram illustrating one embodiment of an air suction portion of the droplet blocking table according to one embodiment of the present invention.

Referring to FIG. 7, the air discharge portion 220 may include the plurality of air discharge holes 221 parallel to the central axis set on the table top 210 and spaced at preset distances apart through which air is discharged along a plurality of rows arranged to be symmetrical on the basis of the central axis.

Here, the air discharge holes 221 may be provided along odd-numbered rows or even-numbered rows arranged to be symmetrical on the basis of the central axis. Here, when the air discharge holes 221 are provided along the odd-numbered rows, one row in which the air discharge holes 221 are provided may be provided to coincide with the central axis set on the table top 210.

Also, in the air discharge portion 220, with respect to a straight line perpendicularly passing through the central axis and a central point between two adjacent air discharge holes 221 among the plurality of air discharge holes 221 provided in an arbitrary first row, the air discharge holes 221 in a second row adjacent to the first row may be provided at a point where the straight line intersects with the second row.

Here, the plurality of air discharge holes 221 provided in the second row may be arranged at the same distance as a distance between the two adjacent air discharge holes among the plurality of air discharge holes 221 provided in the first row.

In this case, it should be understood that the air discharge holes 221 may be provided in a zigzag form with the air discharge holes 221 arranged in an adjacent row thereof. Also, the air discharge holes 221 may be provided at the same positions as the air discharge holes 221 present in an adjacent row.

Meanwhile, when the chairs 30 are provided on each edge of the table top 210, the air discharge portion 220 may include the air discharge holes 221 provided along a straight line connecting an edge facing an apex adjacent to the corresponding edge to an apex adjacent to the apex or the facing edge.

Referring to FIG. 8, the air suction portion 230 may be disposed on the table top 210 along the central axis set on the table top 210 to correspond to the air discharge portion 220 and may suction air discharged from the air discharge portion 220.

Here, when the air discharge portion 220 is parallel to the central axis set on the table top 210 and the plurality of air discharge holes 221 are provided along a plurality of rows arranged to be symmetrical on the basis of the central axis, the air suction portion 230 may be provided on the table top 210 in a plurality of rows along the plurality of rows in which the respective air discharge holes 221 are provided.

While the present invention has been described above with reference to the embodiments, it will be understood by those skilled in the art that variations and modifications of the invention may be made without departing from the idea and scope of the invention as disclosed in the following claims.

**[Description of Reference Numerals]**

| | | | |
|---|---|---|---|
| 1: | virus-free house | 2: | structure |
| 10: | indoor space | 20: | entrance |
| 30: | chair | 100: | air-sterilizing apparatus |
| 200: | droplet blocking table | 201: | support |
| 206: | discharge tube | 210: | table top |
| 220: | air discharge portion | 221: | air discharge hole |
| 230: | air suction portion | 240: | filter portion |
| 300: | air-conditioning apparatus | 400: | ordering apparatus |

## Claims

1. A structure providing an indoor space in a storethe structure comprising:
an entrance;
an air-sterilizing apparatus configured to suction in air present in the indoor space and to sterilize the suctioned air;
a droplet blocking table disposed within the indoor space and comprising a table top, wherein the sterilized air is discharged from a position spaced apart at a distance from an upper side of the table top in a direction toward the table top, and the discharged air is suctioned in along a central axis of the droplet blocking table;
an air-conditioning apparatus configured to move the air suctioned by the droplet blocking table, wherein a part of the suctioned air is discharged by the droplet blocking table; and
an ordering apparatus disposed on one side of the droplet blocking table and configured to transfer order information and payment information input from a user to an order and payment server provided in advance.

2. The structure of claim 1, wherein the droplet blocking table has one side thereof fixed to an opposite wall disposed on an opposite side of the entrance in the indoor space and another side of the droplet blocking table is disposed toward the entrance, and wherein a support is provided on the other side of the droplet blocking table to support the droplet blocking table.

3. The structure of claim 2, wherein the support comprises a discharge tube therein which connects the droplet blocking table and the air-conditioning apparatus and the air suctioned in by the droplet blocking table is transferred to the air-conditioning apparatus via the discharge tube.

4. A droplet blocking table comprising:
a table top having a central axis provided in a direction horizontal to a ground;
an air discharge portion spaced apart at a distance from an upper side of the table top, disposed along the central axis, and configured to discharge air in a direction toward the table top;
a control portion configured to control an intensity of the air discharged from the air discharge portion;
an air suction portion disposed on the table top along the central axis to correspond to the air discharge portion and configured to suction the discharged air; and
a filter portion disposed on one side of the air suction portion to filtrate the air suctioned in by the air suction portion and to be separable from the table top.

5. The droplet blocking table of claim 4, wherein the air discharge portion comprises a plurality of air discharge holes through which the air is discharged, and the plurality of air discharge holes are spaced apart at preset distances along a plurality of rows arranged to be parallel to the central axis and to be symmetrical on a basis of the central axis.

6. The droplet blocking table of claim 5, wherein in the air discharge portion, with respect to a straight line perpendicularly passing through the central axis and a central point between two adjacent air discharge holes disposed in a first row, an air discharge hole in a second row adjacent to the first row is provided at a point where the straight line intersects with the second row.

7. The droplet blocking table of claim 4, further comprising a sensor portion configured to transmit a measurement signal to a chair disposed on a side of the table top, to receive a reflection signal generated by the measurement signal being reflected by an object, and to generate distance information indicating a distance between the table top and the object.

8. The droplet blocking table of claim 7, wherein when the distance information indicates the distance between the table and the object as a distance corresponding to an empty seat, the control portion controls the air discharge portion to stop discharging the air.

9. The droplet blocking table of claim 7, wherein when the distance information indicates the distance between the table and the object as a distance corresponding to an occupied seat, the control portion controls the intensity of the air discharged from the air discharge portion according to the distance between the table and the object.

10. The droplet blocking table of claim 4, further comprising a sensor portion configured to measure a wind velocity of the air suctioned in by the air suction portion and generate wind velocity information.

11. The droplet blocking table of claim 10, wherein when the wind velocity information deviates from a preset wind velocity range corresponding to the intensity of the air discharged from the air discharge portion, the control portion controls an inspection signal requesting an inspection for the air suction portion to be output.

12. The droplet blocking table of claim 4, further comprising a sensor portion comprising a sensing region disposed on one side of the air suction portion, wherein the sensing portion is configured to sense an object present in the sensing region and to generate sensing information.
